(19) Europäisches Patentamt
European Patent Office
Office européen des brevets

(11) Publication number: 0 364 272 A2

# (12) EUROPEAN PATENT APPLICATION

(21) Application number: 89310478.6

(22) Date of filing: 12.10.89

(51) Int. Cl.[5]: C09D 5/14

(30) Priority: 13.10.88 GB 8824003

(43) Date of publication of application: 18.04.90 Bulletin 90/16

(84) Designated Contracting States: DE ES FR GB GR IT NL SE

(71) Applicant: COURTAULDS COATINGS LIMITED
18 Hanover Square
London W1A 2BB(GB)

(72) Inventor: Jackson, Paul Anthony
51 Manor House Road Jesmond
Newcastle-upon-Tyne, NE2 2OY(GB)
Inventor: Baxter, Kenneth Ford
5 Greybourne Gardens
Sunderland(GB)
Inventor: Anderson, Colin Dudgeon
11 Fernville Road Gosforth
Newcastle-upon-Tyne, NE3 4HT(GB)
Inventor: Andrews, Adrian Ferguson
22 Shaws Park
Hexham Northumberland(GB)
Inventor: Arnold, David Edward James
39 The Wynd Gosforth
Newcastle-upon-Tyne, NE3 4LA(GB)
Inventor: Lenney, Peter William
Carthorpe Cottage
Carthorpe, Nr. Bedale North Yorkshire(GB)
Inventor: Nunn, Michael John
Low Walden Farmhouse
Low Walden Nr. Hexham
Northumberland(GB)
Inventor: Sinclair-Day, John David
13 Jasper Avenue
Greenside Ryton Tyne and Wear(GB)

(74) Representative: Hale, Stephen Geoffrey et al
J.Y. & G.W. Johnson Furnival House 14/18
High Holborn
London WC1V 6DE(GB)

## (54) Coating compositions.

(57) An antifouling coating composition, e.g. for ships' hulls, comprises a biocide for marine organisms and a solution or dispersion of a binder polymer (A) which is an acid-functional polymer or a polymer hydrolysable to an acid-functional polymer. The coating composition contains a solution of a compound (B) of a polyvalent cation or of a precursor of such a compound at a molar ratio of polyvalent cations in the compound (B) to acid groups and/or groups hydrolysable to acid groups in the polymer (A) of 1:4 to 1:100. The polymer (A) and the compound (B) are capable of undergoing a crosslinking reaction when the composition is coated on a surface so that the polyvalent cation forms crosslinks between acid groups on different polymer molecules, and may be at least partially reacted in the composition provided that it remains ungelled.

EP 0 364 272 A2

# COATING COMPOSITIONS

This invention is concerned with antifouling coating compositions used on surfaces likely to come into contact with marine fouling organisms such as algae, seaweed and barnacles, for example on ships or boats, or on the outfalls for cooling water from power stations. Such coating compositions generally comprise a biocide for marine organisms and a binder polymer. More particularly, it relates to compositions capable of forming a coating film having an improved binder polymer.

The most successful anti-fouling paints in recent years have been self-polishing antifouling paints using binders which are linear polymers containing pendent side groups (hereinafter called "leaving groups") which are liberated from the polymer by reaction with seawater, the residual polymer being sufficiently dispersible or soluble in seawater to be swept away from the paint surface, exposing a fresh layer of the binder able to undergo a similar reaction with seawater. Such paints are described for example in British Patent 1457590. The gradual thinning of the paint film controls the release of a biocide active against fouling. The well known benefits of such self-polishing paints are that the paint film tends to at least retain its initial smoothness and that the biocide contained in the paint tends to be delivered from the surface at a more uniform or constant rate.

The only commercially significant self-polishing paints employ binders which comprise triorganotin ester leaving groups. The triorganotin provides some of the biocidal action of the paints and the triorganotin ester readily undergoes the hydrolysis on which the self-polishing action is dependant. The biocidal activity can be augmented by other antifouling substances dispersed or dissolved in the paint film. There may be advantages in replacing some or all of the triorganotin ester leaving groups by other leaving groups, which are not necessarily biocidal, both for cost reasons and because the powerful biocidal effects of triorganotin may not be desired. There has been concern about the environmental effect of triorganotin biocides released from yachts in particular.

International Patent Application WO84/02915 discloses an antifouling paint having a hydrolysable film-forming water-insoluble seawater-erodible polymeric binder having recurring groups represented by the formula:

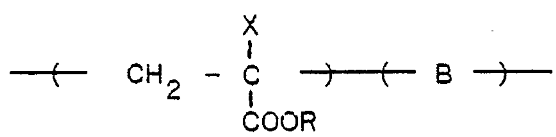

where X is hydrogen or methyl and R is a substituted alkyl, aryl, aralkyl or triorganosilyl moiety and B is the residue of an ethylenically unsaturated comonomer. WO84/02915 describes a wide range of groups R, but it has been found in practice that the less readily hydrolysable groups R such as benzyl, aminoalkyl and haloalkyl groups do not give a polymer which dissolves in seawater and the more readily hydrolysable groups such as trialkylsilyl groups give a polymer which rapidly hydrolyses to a mechanically weak film in seawater.

International Patent Application WO86/02660 discloses a self-polishing antifouling paint comprising a biocide for marine organisms and a binder which is a linear synthetic film-forming polymer containing three carboxylic acid groups or carboxylic anhydride groups and having an equivalent weight of from 240 to 750. The paint can be pigmented with a seawater-reactive pigment by coating the pigment with a polymer labile to seawater.

European Patent Application No. 204,456 discloses a hydrolysable resin composition consisting of an organic solvent solution of a resin having at least one side chain bearing at least one terminal group of the formula -COO-M-R, where M is zinc, copper or tellurium and R represents an organic acid residue such as $OOCR^1$ where $R^1$ is an organic residue. The hydrolysable resin composition is used as the binder for an antifouling paint and gradually becomes dissolved in seawater to give controlled release of an antifouling agent. The hydrolysable resin composition is prepared in one of three ways. In the first method a mixture of a metal oxide, hydroxide, sulphide or chloride, a monovalent organic acid or its alkali metal salt and a polymerisable unsaturated organic acid or its alkali metal salt is heated with stirring and the by-products such as alkali metal chloride, water, monovalent organic acid metal ester and bifunctional polymerisable unsaturated organic acid metal salt are removed to obtain a purified metal ester between the polymerisable unsaturated organic acid and the monovalent organic acid. This purified metal ester is then subjected to

polymerisation. In the second method a resin having at a side chain an organic acid or its alkali metal salt is heated with a metal oxide, hydroxide, sulphide or chloride and a monovalent organic acid under stirring with removal of by-products to obtain a resin having at least one side chain bearing the desired metal ester terminal group. In the third method a resin having at a side chain an organic acid is heated with a monovalent organic acid metal ester to effect an ester exchange reaction. In this reaction, when the selected monovalent organic acid is of low boiling nature there is a fear that a metal ester bonding is liable to be occurred between the resins and the reaction should be carefully controlled.

British Patent No. 1497683 discloses a polymeric film-forming composition suitable for use as a marine antifouling paint and comprising a polyacrylate salt of a metal having antifouling properties. Either the polyacrylate salt is non film-forming and is dissolved or dispersed in a polymeric film-forming paint base or the polyacrylate salt is film-forming in itself and is a copolymer of an acrylic acid ester and an acrylic acid salt, the ratio of ester: salt being at least 60:40 molar. The polyacrylate salts are prepared by reacting a solution of an acrylic acid polymer in a polar solvent with an aqueous alkaline solution of a metal salt such as zinc sulphate or copper nitrate. The polyacrylate salt is precipitated and can be dissolved in a highly polar solvent such as dimethyl formamide but not in solvents generally used as paint solvents.

Japanese laid-open unexamined Patent Application 6357676 discloses an antifouling paint composed of

(A) a copolymer obtained by polymerising at least one organic monomer selected from acrylic and vinyl type monomers, and at least one unsaturated triorganosilyl acrylate or methacrylate monomer,

(B) copper powder, copper alloy powder and/or a copper compound, and

(C) polymethylsilsesquioxane fine powder.

An antifouling coating composition according to the present invention comprises a biocide for marine organisms and a solution or dispersion of a binder polymer (A) which is an acid-functional polymer or a polymer hydrolysable to an acid-functional polymer, and is characterised in that the composition contains a solution of a compound (B) of a polyvalent cation or of a precursor of such a compound at a molar ratio of polyvalent cations in the compound (B) to acid groups and/or groups hydrolysable to acid groups in the polymer (A) of 1:4 to 1:100, the polymer (A) and the compound (B) being at least partially reacted in a crosslinking reaction to form an ungelled composition or being capable of undergoing a crosslinking reaction when the composition is coated on a surface, said crosslinking reaction being a reaction in which the polyvalent cation forms crosslinks between acid groups on different polymer molecules.

The acid-functional polymer (A) can, for example contain carboxylic acid groups, phosphonic acid groups, phosphoric acid groups, sulphonic acid groups, phenolic hydroxyl groups or thiol groups. Carboxylic acid groups are preferred. The acid groups are preferably pendent to the polymer chain.

When it contains carboxylic acid groups the acid-functional polymer (A) is preferably an addition polymer of an olefinically unsaturated carboxylic acid such as acrylic, methacrylic, maleic, fumaric, itaconic or aconitic acid. The polymer preferably contains 10 to 50% by weight of the acid monomer units and most preferably has an equivalent weight of 240 to 600 calculated as acid groups (equivalent to an acrylic acid content of 14.3 to 35.8% by weight or a methacrylic acid content of 16.7 to 41.7% by weight). The acid monomer is preferably copolymerised with one or more comonomers which are unreactive with acid groups or with the compound (B), for example acrylic esters such as methyl acrylate, methyl methacrylate, ethyl acrylate, butyl acrylate or 2-ethylhexyl methacrylate, styrene, acrylonitrile, vinyl acetate, vinyl butyrate, vinyl chloride or vinyl pyridine. Alternatively, the comonomer can be an aliphatic olefin such as ethylene; a copolymer of acrylic acid or methacrylic acid with ethylene when partially neutralised with polyvalent metal cations from compound (B) after application of the coating can give coated films having some of the properties of ionomer resins.

If alternative acid groups are used in the polymer (A) they also are preferably present in an addition polymer, for example an addition copolymer of an olefinically unsaturated phosphonic, phosphoric or sulphonic acid. Examples of such unsaturated acids are vinyl phosphonic acid, styrene phosphonic acid, 2-acrylamidopropane phosphonic acid, ethylidene-1,1-diphosphonic acid, hydroxyethyl acrylate monophosphate, vinyl sulphonic acid, 2-acrylamido-2-methyl-propane sulphonic acid, methallyl sulphonic acid and styrene sulphonic acid. Polymers containing stronger acid groups such as sulphonic acid groups may have a higher equivalent weight, for example in the range 500-2000, than those containing carboxylic acid groups.

The compound (B), which may in general be described as an ionic compound, is preferably a salt of a polyvalent metal, e.g. with a monobasic organic acid, but can alternatively be a salt of a cation which contains two or more ammonium, phosphonium or sulphonium groups. It may be dissolved in water or an organic solvent. For many uses, particularly those in which the coating is to come into contact with water, organic-solvent-soluble salts of polyvalent metals may be preferred.

The biocide for marine organisms is preferably a metalliferous pigment which is sparingly soluble in

seawater, for example cuprous oxide, cuprous thiocyanate, zinc oxide, zinc ethylene bis(dithiocarbamate), or cuprous ethylene bis(dithiocarbamate). These pigments produce water-soluble metal compounds on reaction with seawater so that when the pigment is included in a marine paint the pigment particles do not long survive at the paint surface in contact with seawater. Preferably, the pigment has a solubility in seawater of from 1 to 10 parts per million by weight. Such a pigment, particularly an oxide pigment such as cuprous oxide or zinc oxide, has the effect of inducing smoothing of the paint film as the polymer binder is gradually dissolved during movement of a ship through seawater. Some divalent metal ions suitable for use as the polyvalent cations for compound (B), for example copper, have antifouling properties but the amount of organic-solvent-soluble metal salt containing such divalent metal ions included in the composition as compound (B) will not generally be sufficient to prevent fouling in the absence of other biocides.

The acid groups of the polymer (A) can be in the form of free acid groups or can be bonded to a blocking group by a hydrolysable bond so that the polymer (A) is protected from substantial crosslinking by the polyvalent cation of compound (B) during storage of the coating composition. Polymers containing free acid groups may undergo premature gelation by certain dissolved polyvalent metal salts acting as compound (B) and/or by certain metalliferous pigments acting as marine biocides, as described in more detail below. Polymers containing blocked acid groups may therefore be preferred as giving a wider choice of dissolved metal salts and of biocidal pigments.

Examples of suitable hydrolysable blocking groups for the acid groups of polymer (A) are triorganosilyl groups, for example trialkylsilyl groups such as trimethylsilyl. Trimethylsilyl carboxylate ester bonds hydrolyse rapidly in contact with seawater so that substantially all the trialkylsilyl groups are hydrolysed from a 100 micron coating film of the polymer within one week of immersion in seawater. Triorganosilyl carboxylate esters containing larger organic groups such as dimethylphenylsilyl or dimethylhexylsilyl are hydrolysed somewhat less rapidly. Alternative hydrolysable blocking groups are amine or substituted ammonium, phosphonium or sulphonium groups which form organic-solvent-soluble salts of the polymer, for example amine carboxylate salt groups derived from monoamines including at least one organic group containing at least eight, preferably 8 to 30, carbon atoms. Examples of such amines are long-chain alkyl amines such as dodecyl amine, hexadecyl amine, octadecyl amine or oleyl amine. Mixtures of amines derived from the aliphatic groups present in natural fats and oils can be used, for example coconut, tallow or hydrogenated tallow amine. Alternative amines are aralkyl amines such as those sold commercially as "phenalkamines" and amine derivatives of rosin such as dehydroabietylamine sold commercially under the trade name "Rosin Amine D". Primary amines are preferred but a secondary amine such as N-methyl coconut amine can be used. Further alternative hydrolysable blocking groups are quinolinyl groups or triphenylmethyl groups. The benzotriazole amide of an unsaturated carboxylic acid such as acrylic or methacrylic acid is hydrolysable after polymerisation.

Carboxylic acid anhydride, particularly cyclic anhydride, groups can be used in organic solvent solution as blocked acid-functional groups in a polymer (A) because they are protected from undergoing any substantial crosslinking reaction with compound (B) in the absence of water.

The blocked acid-functional polymer (A) can be prepared by addition polymerisation of the blocked acid monomer such as a hydrolysable derivative of an olefinically unsaturated carboxylic acid, for example a trialkylsilyl acrylate or methacrylate or a long-chain amine salt of acrylic or methacrylic acid, with one or more comonomers. Polymerisation is preferably carried out in an organic solvent such as xylene, toluene, butyl acetate, butanol, butoxyethanol, methyl isobutyl ketone, methyl isoamyl ketone, methyl ethyl ketone and/or methoxypropyl acetate at a temperature of 60 to 100 °C using a free radical catalyst such as benzoyl peroxide or azobisisobutyronitrile. The blocked acid-functional polymer (A) can alternatively be prepared by reacting an acid-functional copolymer having free carboxyl groups with a blocking agent.

Examples of metals which can be used as the polyvalent cation of the compound (B) are iron, nickel, cobalt, vanadium, chromium, tin, copper, barium, magnesium, calcium, manganese, zinc, titanium, zirconium, aluminium and strontium. The metal compound is preferably a carboxylate salt of the polyvalent metal cation and particularly of a divalent cation such as cupric, ferrous, zinc, chromous, stannous or zirconyl. The carboxylic acid used to form the salt should preferably be sufficiently lipophilic that the metal salt is soluble in common organic solvents such as hydrocarbons. In general, the carboxylic acid requires a carbon content of at least six carbon atoms, preferably six to twenty carbon atoms, to give an organic-solvent-soluble salt. The salt can for example be an octoate, naphthenate, "Versatate", rosinate, caproate or caprylate. For use with a blocked acid-functional polymer, octoates and naphthenates are generally satisfactory. Alternative organic-solvent-soluble compounds of polyvalent metal cations are enolates, for example titanium or zirconium acetylacetonate, or an alkanolamine titanate such as that sold under the trade name "Tilcom AT 33".

The compound (B) is used at a less than stoichiometric amount with respect to the free and/or blocked

acid groups in the polymer (A). The molar ratio of the polyvalent cations in the compound (B) to the acid groups and/or groups hydrolysable to acid groups in the polymer (A) is in the range 1:4 to 1:100. For a divalent metal carboxylate salt (B) used with a blocked acid-functional polymer (A), the equivalent ratio of carboxylate groups in the metal salt to blocked acid groups in the polymer is from 1:2 to 1:50, and preferably from 1:4 to 1:16; that is a molar ratio of metal carboxylate to blocked acid groups of 1:4 to 1:100, preferably 1:8 to 1:32.

Polyamines or polyphosphines, preferably diamines, can be used in place of metals to provide the polyvalent cations in compound (B) and these compounds can be added as such, as precursors of compound (B), in equivalent amounts. The polyamines, e.g. diamines, and polyphosphines react with acid groups to form polyammonium, e.g. diammonium, and polyphosphonium salt crosslinks between polymer chains. The diamine is preferably a low molecular weight diamine having a molecular weight below 200, for example ethylene diamine or propylene diamine. Triamines such as diethylene triamine can alternatively be used.

As an alternative or in addition to the use of blocked acid groups, the acid-functional polymer (A) and a metal-containing salt acting as compound (B) can be prevented from substantial crosslinking reaction leading to gelation during storage of the composition by the use of a metal-complexing agent. The cations of the metal-containing compound (B) can be bound to a complexing agent which renders the cations ineffective in crosslinking reaction with the acid-functional polymer (A) during storage of the coating composition but which can readily be removed from the cations when the coating has been applied to a surface. For example the complexing agent can be a volatile ligand such as ammonia. Cuprammonium salts, such as cuprammonium chloride or hydroxide, or zinc ammonium salts can be used in aqueous solution as a precursor for compound (B) in the coating composition with the acid-functional polymer being used as a separate component, preferably in aqueous solution or dispersion. As ammonia gradually evaporates from the cuprammonium compound the resulting copper compound (B) crosslinks the acid-functional polymer (A).

Since the polymer (A) is capable of undergoing a crosslinking reaction with polyvalent cations, there is a possibility of gelation on storage of a coating composition containing a polymer (A) having free acid groups or even of a polymer (A) which is readily hydrolysable to an acid-functional polymer if the coating composition contains a metalliferous pigment used as marine biocide. The antifouling coating composition is in most cases preferably used as a two-pack coating composition. The metalliferous pigments, particularly the oxide pigments such as cuprous oxide or zinc oxide, serving as marine biocides are preferably packaged separately from the acid-functional polymer (A) unless the latter is securely protected from reaction with metal compounds by blocking the acid groups.

Since the compound (B) is used at a much less than stoichiometric amount with respect to the acid groups or groups hydrolysable to acid groups in polymer (A), it can in many cases be packaged with the polymer (A) and can react at least partly therewith in a crosslinking reaction without causing gelation. The compound (B) may cause some thickening of the coating composition due to the partial crosslinking and it is therefore generally preferred that the compound (B), for example an organic-solvent-soluble metal salt, is packaged separately from the polymer (A), each for example being dissolved in an organic solvent.

The metalliferous pigment serving as marine biocide can for example be packaged with the compound (B), e.g. it can be dispersed in an organic solvent solution of the soluble metal salt serving as compound (B). This solution is preferably thickened by a resin, for example an auxiliary film-forming resin, or a plasticiser. The plasticiser or auxiliary resin may be chosen to have an effect in controlling the rate of dissolution of the coated film in seawater. For example, a hydrophobic plasticiser such as a chlorinated paraffin or a low molecular weight polybutene will retard dissolution. A hydrophilic resin such as a methyl vinyl ether polymer, which acts as an auxiliary film-forming resin and also has a plasticising effect, will aid dissolution in seawater. The plasticiser can for example be used at 10 to 50% by weight based on the blocked acid-functional polymer (A).

The solvent for each part of the coating composition can be an aliphatic or aromatic hydrocarbon, for example white spirit or xylene, or a more polar solvent, for example a ketone such as methyl isobutyl ketone or methyl isoamyl ketone, an ether alcohol such as butoxyethanol or an ester such as methoxypropyl acetate. The solvent for a blocked acid-functional polymer (A) may preferably be a mixture of a hydrocarbon and a more polar solvent, for example xylene with methyl isobutyl ketone or butanol, to keep the polymer in a solution of sufficiently low vis cosity for easy application by spray whether it remains as blocked polymer or is partially hydrolysed to a polymer containing acid groups. The solvents for the two parts of the coating composition should be miscible and may be substantially the same.

In such two-pack coating compositions the separately packaged components are unified before the coating composition is applied to the surface. For example the two packages can be mixed in a pot and

applied to the surface within a short time such as 0.2 to 12 hours, e.g. 0.2 to 3 hours. In this case it is preferred that either the acid-functional polymer (A) is blocked with a hydrolysable group or the cation of the metal compound (B) is complexed as described above. The two-pack coating composition can alternatively be applied by twin-feed spray in which the separately packaged components are mixed only in the spray apparatus used to apply them to the surface to be coated. If twin-feed spray is used the acid-functional polymer (A) and the compound (B) are sufficiently protected from premature crosslinking so that a blocking agent or complexing agent is not necessary and reaction between them before they reach the surface to be coated is insufficient to cause gelation.

When the acid-functional polymer (A) is blocked by a hydrolysable group and the compound (B) is an organic-solvent-soluble divalent metal carboxylate used at a molar ratio of metal to blocked acid groups in the range of 1:4 to 1:100 quoted above, the composition generally has an adequate pot-life for practical purposes, for example at least one hour after mixing of the two parts of the coating composition, and forms a well-cured coating film. Higher proportions of the organic-solvent-soluble metal carboxylate (B) tend to give a lower pot-life. Lower proportions of the organic-solvent-soluble metal carboxylate (B) tend not to give adequate toughening of the coating.

The coating composition can alternatively be a single-pack composition in which the blocked acid-functional polymer (A) and the compound (B) are dissolved in a common organic solvent and packaged together. The moisture content of a single-pack composition needs to be controlled to avoid gelation of the composition on storage, particularly if the blocking group is very readily hydrolysable, such as a trimethylsilyl ester group. Moisture may be excluded by using ingredients which are substantially moisture-free, or a controlled amount of water can be present in the composition to cause some hydrolysis of the blocked acid-functional polymer and subsequent crosslinking with the dissolved compound (B). This crosslinking reaction tends to thicken the composition and may be used to give the desired viscosity for application, provided that gelation does not occur. It may also increase the ability of the coating composition for forming a hard film soon after application. The amount of moisture present in such a single-pack composition should be less than an equivalent amount with respect to the compound (B), and preferably less than half that amount. When the coating composition contains a reactive metalliferous pigment serving as marine biocide, for example an oxide pigment such as cuprous oxide or zinc oxide, the present of even a small amount of water may lead to gelation of the composition. Moreover the pigment may itself have some surface moisture. Two-pack compositions are strongly preferred when such pigments are used and the blocking group is very readily hydrolysable.

Cuprous thiocyanate and zinc or cuprous ethylene bis(dithiocarbamate) are relatively less reactive amongst metalliferous pigments serving as marine biocides and may be the preferred pigments for use in single pack compositions. Alternatively, zinc oxide or cuprous oxide may be rendered insensitive to the acid-functional polymer (A) by micro-encapsulation in or coating with a polymer labile to seawater. For example, the pigments may be reacted with a dilute solution of a polycarboxylic acid copolymer or with an acid-functional dispersant, and the reaction product then separated from the solution and incorporated in the coating composition. Alternatively, the active sites on the surface of the pigment particles may be rendered unreactive to the polymer (A) by treatment with a complexing agent such as an oxalate or a titanate ester or titanyl complex, for example titanium acetylacetonate.

Whilst substantially any organic-solvent-soluble carboxylate salt of a divalent metal, and particularly of copper, zinc, iron or chromium, can be used as compound (B) with a blocked acid-functional polymer (A), only certain metal carboxylates can be used with polymers (A) having free acid groups. For example, for use with a blocked acid-functional polymer (A), octoates and naphthenates are generally satisfactory. For use with a free acid-functional polymer (A) copper naphthenate allows an adequate pot-life, but zinc naphthenate or ferrous octoate react too rapidly, forming a precipitate which agglomerates with the polymer. Rosinates such as zinc, ferrous or copper rosinate can be used with an acid-functional polymer. When copper naphthenate or a rosinate is used with a free acid-functional polymer, the coating composition can be a two-pack composition in which the copper naphthenate or the rosinate can be packaged either with the acid-functional polymer or with the metalliferous pigment. Alternatively, the composition can be single-pack if a less reactive metalliferous pigment such as cuprous thiocyanate or zinc ethylene bis(dithiocarbamate) is used. If the copper naphthenate or the rosinate is packaged with the acid-functional polymer, either in two-pack or single-pack composition, it tends to increase the viscosity of the acid-functional polymer, but not so much as to make spray application of the composition difficult. It may also increase the ability of the coating composition to form a hard film soon after application.

When the polymer (A) contains groups hydrolysable to acid groups but less readily hydrolysable than trimethylsilyl groups, the coating composition can be a single-pack composition even if a reactive metalliferous pigment such as cuprous oxide or zinc oxide is present as marine biocide. Examples of such

hydrolysable groups are amine carboxylate salts in which the amine is a monoamine having 8 to 30 carbon atoms or quinolinyl or triphenylmethyl carboxylate ester groups. The blocked acid groups do not substantially react with the metalliferous pigment or with the compound (B) during storage of the coating composition, but they are hydrolysed in contact with seawater and are crosslinked by the compound (B) in the coated film on a surface.

In an alternative form of two-pack coating composition according to the invention a blocked acid-functional polymer having bonds labile to hydrolysis and the compound (B) used as crosslinker, which may be complexed with a volatile ligand, can be packaged together, with a hydrolysis catalyst, for example an acidic or basic catalyst, being packaged separately. A basic hydrolysis catalyst such as an amine can for example be packaged with the metalliferous pigment used as biocide. In this case the blocking groups in the polymer (A) are preferably of the less readily hydrolysed type such as quinolinyl or trimethylphenyl ester groups.

If a precursor of the compound (B) such as a polyamine, for example a diamine, is used it is preferably used with a polymer (A) having blocked acid groups rather than free acid groups. The diamine can be used in a single pack composition with a polymer (A) having blocking groups of the less readily hydrolysable type. It can be packaged separately from the polymer (A) in a two-pack composition if the blocking groups are more readily hydrolysable.

In an alternative form of coating composition according to the invention, the polymer (A) contains blocking groups hydrolysable to acid groups and is dissolved in a water-miscible polar organic solvent, for example butanol or butoxyethanol or a mixture of such a polar solvent with a hydrocarbon such as xylene, under acid conditions. The blocking groups are preferably of the less readily hydrolysable type. The compound (B) is a polyvalent metal salt, for example a metal carboxylate, in aqueous solution. The polymer (A) is much less susceptible to hydrolysis under acid conditions but in contact with seawater is hydrolysed and is crosslinked by the compound (B) in the coated film.

When the coating composition has been applied to a substrate, the coating formed is exposed to conditions under which the hydrolysable bond is broken between the acid, e.g. carboxyl, groups of the polymer and the blocking group. This can be done by exposing the coating to atmospheric moisture or contacting it with water, for example seawater. The blocking groups are hydrolysed from the polymer, leaving free acid, e.g. carboxylic acid, groups. These carboxylic acid groups undergo a displacement reaction with the metal salt acting as compound (B) to form a metal carboxylate bond to the polymer. Further reaction may occur to form a metal carboxylate bond to another polymer chain, i.e. crosslinking can take place, forming a strengthened coating film. The effects of crosslinking can be seen from the immersion in seawater of a coating from a trimethylsilyl-blocked acid-functional polymer with increasing amounts of an organic solvent solution of a divalent metal carboxylate. The blocked acid-functional polymer with no metal carboxylate forms a weak film which has a hard outer skin at the water/polymer surface loosely covering a soft inner layer which does not harden. Addition of the metal carboxylate at low levels toughens the film, forming a thicker, smoother and more tightly bound skin. Addition of the metal carboxylate at molar ratios of metal carboxylate to blocked acid groups greater than 1:16, for example 1:16 to 1:8, forms uniform tough films with no apparent skin.

The compound (B), for example a divalent metal carboxylate, also affects the glass transition temperature Tg of the blocked acid-functional polymer (A). The metal carboxylate tends to increase the Tg of the polymer applied as a film under dry conditions. For example a trimethylsilyl-blocked acid-functional polymer having a Tg of about 50 °C may have its Tg increased to 55-63 °C by addition of a divalent metal carboxylate at molar ratios of 16:1 to 4:1. When the films are immersed in water, however, the blocked acid-functional polymer having no metal carboxylate increases in Tg, eventually up to 100 °C; this is believed to be caused by hydrolysis of the blocked acid groups and subsequent hydrogen-bonding effects. The polymers containing metal carboxylate also increase in Tg on immersion, but to a lesser degree. For molar ratios of blocked acid groups to metal carboxylate of 16:1 to 4:1, the Tg after immersion is generally 80 to 65 °C.

Both the compound (B) and the metalliferous pigment used as biocide are capable of reacting with carboxylic acid groups liberated in the polymer (A) as the hydrolysable bonds to the blocking groups are hydrolysed, for example when the coating is applied to a substrate or when the coated film contacts seawater. The carboxyl groups will however react more readily with the metal salt serving as compound (B) when it is dissolved in a solvent, preferably the same solvent as used for the blocked acid-functional polymer. Reaction with the dissolved metal salt serving as compound (B) leads to a coating film in which polymer chains are crosslinked by individual metal atoms joined to two different polymer chains by metal carboxylate bonds. This crosslinked polymer structure gives a tougher coating film than a film in which the polymer chains are predominantly bonded to pigment particles.

On prolonged immersion of such a material in seawater, as is encountered by an anti-fouling marine paint, hydroly sis of the metal carboxylate bonds will gradually take place with the formation of ionic bonds to cations present in seawater, particularly sodium. When the concentration of carboxyl groups in the polymer which are neutralised by sodium reaches a certain critical point the polymer becomes soluble in seawater. The polymer thus becomes gradually dissolved away in seawater at the surface of the paint film in the manner of known self-polishing antifouling coatings. The metal carboxylate bonds control and reduce the rate at which the paint is dissolved from the side of the ship (the "polishing rate"). Paints based on blocked acid-functional polymers (A) containing a high proportion of acid groups blocked by a readily hydrolysed blocking group such as a trimethylsilyl group have a high polishing rate. In such a paint the polishing rate is approximately halved by the use of a metal carboxylate as compound (B) at a molar ratio of 1:32 to 1:50 with respect to blocked acid groups. The polishing rate is reduced by about 80% by the use of a metal carboxylate at a molar ratio of 1:8 to 1:16 with respect to blocked acid groups.

The antifouling paint according to the invention can contain a non-metalliferous biocide for marine organisms, for example tetramethyl thiuram disulphide, methylene bis(thiourea), 4-butyl catechol, captan, a substituted isothiazolone or 2-(N,N-dimethylthiocarbamoylthio)-5-nitrothiazole. Such a biocide can be used instead of or in addition to a marine biocide which is a metalliferous pigment.

Coating compositions according to the invention may contain further components known for use in paints, for example pigments, plasticisers, thickening and anti-settling agents, auxiliary film-forming resins and stabilisers against heat or light.

A pigment which is not reactive with seawater and may be highly insoluble in seawater (solubility below 0.5 ppm by weight) can be used, such as titanium dioxide or ferric oxide. Such highly insoluble pigments tend to retard dissolution of the paint and are preferably used at less than 40 per cent by weight of the total pigment component of the composition, most preferably less than 20 per cent by weight.

For most uses, the overall proportion of pigment to binder polymer (A) is preferably such as to give a pigment volume concentration which is above 25 per cent in the dry paint film but below the critical pigment volume concentration; most preferably the pigment volume concentration is from 35-50 per cent. For certain uses, for example as an antifouling varnish for yachts, the coating composition may have a lower pigment volume concentration or may contain substantially no pigment. The marine biocide preferably constitutes 10 to 50 percent by volume of the non-volatile constituents of the coating composition.

The invention is illustrated by the following Examples. Examples 1 to 28 illustrate the effect of a variety of compounds (B) at various concentrations on films formed with a polymer (A). The compositions disclosed lack a separate biocide for marine organisms but can have a biocide such as cuprous oxide or cuprous thiocyanate or a non-metalliferous biocide mentioned above incorporated to form an antifouling coating composition.

## Example 1

A blocked acid-functional polymer (A) containing carboxylic acid groups blocked by trimethylsilyl groups was prepared by copolymerising trimethylsilyl methacrylate, ethyl methacrylate and methoxyethyl acrylate in the molar ratio 26:54:20 in xylene using an azo initiator to form a 44.4% by weight polymer solution.

45.2 g of the solution of the polymer (A) was mixed with 2.7 g of a solution of copper(II) naphthenate (compound (B)) in hydrocarbon solvent (white spirit) containing 6 g copper per 100 g solution. The solutions were thoroughly mixed by a palette knife and the coating composition so formed was applied to glass panels using a 400-micron bar applicator. The panels were dried in air at room temperature for 24 hours.

The viscosity of the polymer solution before mixing with the copper naphthenate was about 4 poise. The viscosity of the mixed coating composition was measured after 1 hour to give an indication of pot-life of the composition. The viscosity at this stage was 17 poise, which was still acceptable for application as a coating.

After the coating had been dried for 24 hours the panel was immersed in synthetic seawater and the coating was observed over a period of three weeks. A coating formed from the polymer solution alone without copper naphthenate formed a loose skin after 1 day. The skin gradually thickened through the coating to the glass substrate after 4 or 5 days. The coating was then weak, with poor film integrity. When the coating formed from polymer solution mixed with copper naphthenate was immersed in seawater, a thinner and tighter skin was formed with no apparent swelling of the coating. The coating remained tougher and film integrity was greatly improved.

The molar ratio of blocked acid groups in the polymer to copper in the copper naphthenate in this

example was 16:1 (equivalent ratio 8:1).

**Example 2**

Example 1 was repeated but the amount of the copper naphthenate solution was increased to 4.0 g (molar ratio of blocked acid groups to copper 10.6:1). In this case there was no skin formation when the coated panel was immersed in salt water. The coating film remained smooth and hard. The viscosity of the coating composition after 1 hour was 30 poise.

**Examples 3 and 4**

Example 1 was repeated increasing the amount of the copper naphthenate solution to 5.34 g (Example 3) and 10.7 g (Example 4) (molar ratio of acid groups to copper 8:1 and 4:1, respectively). A smooth hard tough coating was produced in each case which remained smooth, hard and tough after three weeks' immersion in water. Both coating compositions had gelled after 1 hour, i.e. they had a pot-life of less than 1 hour.

**Examples 5 and 6**

Example 1 was repeated decreasing the amount of the copper naphthenate solution to 1 .34 g (Example 4) and 0.567 g (Example 5), a molar ratio of acid groups to copper of 32:1 and 64:1, respectively. Smooth hard coatings were formed. When the coated panels were immersed in seawater a skin was formed, although the skin was thinner and tighter than that formed on a coating of the polymer in the absence of copper naphthenate.

**Examples 7 to 28**

Example 1 was repeated using different organic solvent solutions of metal compound in varying amounts in place of copper naphthenate. The results are set out in Table 1 below. This Table shows the compound used, the molar ratio of blocked acid groups in the polymer to metal atoms in the soluble metal compound, the viscosity of the coating composition 1 hour after mixing and the nature of the film after immersion in seawater.

The tin octoate used in Examples 7 - 10 was stannous 2-ethylhexanoate. This and the zinc octoate of Examples 11 - 15 were used as solutions in a hydrocarbon solvent containing about 6% by weight of the metal.

The chromium and iron soaps used in Examples 16-24 were fatty acid salts commercially available as organic solvent solutions containing 6% by weight of the metal. The zirconium dryer used in Examples 25 - 28 was a zirconium compound sold commercially in organic solution as a drying accelerator for alkyd coatings.

Table 1

| Example number | Metal compound | Acid to metal molar ratio | Viscosity after 1 hour in poise | Performance in seawater |
|---|---|---|---|---|
| 7 | tin octoate | 8:1 | gelled | tight skin |
| 8 | tin octoate | 12:1 | gelled | tight skin |
| 9 | tin octoate | 16:1 | very viscous | tight skin |
| 10 | tin octoate | 32:1 | 7 | tight skin |
| 11 | zinc octoate | 8:1 | gelled | tight skin |
| 12 | zinc octoate | 12:1 | gelled | tight skin |
| 13 | zinc octoate | 16:1 | 20 | tight skin |
| 14 | zinc octoate | 32:1 | 16 | tight skin |
| 15 | zinc octoate | 64:1 | 6 | tight skin |
| 16 | chromium soap | 2:1 | gelled | no skin |
| 17 | chromium soap | 4:1 | 40 | no skin |
| 18 | chromium soap | 12:1 | 24 | tight skin |
| 19 | chromium soap | 16:1 | 12 | tight skin |
| 20 | chromium soap | 32:1 | 4.8 | tight skin |
| 21 | iron soap | 8:1 | gelled | no skin |
| 22 | iron soap | 16:1 | gelled | no skin |
| 23 | iron soap | 32:1 | 8.8 | tight skin |
| 24 | iron soap | 64:1 | 4.8 | tight skin |
| 25 | zirconium dryer | 8:1 | gelled | no skin |
| 26 | zirconium dryer | 12:1 | gelled | no skin |
| 27 | zirconium dryer | 32:1 | 12 | tight skin |
| 28 | zirconium dryer | 64:1 | 5.6 | tight skin |

The performance in seawater is rated as "no skin" if the coating film remained smooth and hard throughout 3 weeks' immersion in seawater. When the performance in seawater is rated "tight skin" a skin formed on the coating but this was thinner and smoother than the skin formed on a coating of the blocked acid polymer without any metal compound. In general, where a skin formed on the coating in seawater, the skin was thinner and smoother with increasing metal content of the coating composition.

**Examples 29 to 42**

Two-pack antifouling paints were prepared having the following formulation.

| First pack | Per cent by weight |
|---|---|
| Polymer solution of Example 1 | 84.0 |
| Titanium dioxide (inert pigment) | 14.0 |
| "Aerosil" colloidal silica | 2.0 |
| **Second pack** | |
| Chlorinated paraffin plasticiser | 3.9 |
| Ethyl vinyl ether polymer | 6.0 |
| Bentonite clay | 1.7 |
| Cuprous oxide | 76.6 |
| Xylene | 11.8 |

For application, the first and second packs were mixed in a weight ratio of 1:1.56 (volume ratio 1.6:1). Before mixing, a metal carboxylate was added to the second pack to give a molar ratio of blocked acid

groups in the trimethylsilyl methacrylate copolymer to metal carboxylate as set out in Table 2 below. The various paints produced were each applied as two stripes on a 22.5 cm diameter disc at a wet film thickness of 400 microns using a cube applicator. When the paints were dry, the disc was rotated in seawater for 30 days to test the "polishing rate" of the paint on movement through seawater. The film thickness was measured before and after the 30-day trial. For comparison purposes, each disc also contained two stripes of a commercially successful self-polishing tin copolymer paint (SPC) and two stripes of the two-pack antifouling paint without any additive. The results are shown in Table 2, where the "polishing rate" is the ratio of the film thickness depletion of the sample compared to that of the SPC standard. The condition of the paint at the end of the trial is also noted; it should be noted that some commercial antifouling paints also show slight cracking in such a trial. Where a paint stripe is partly detached from the disc, the polishing rate is measured from the intact paint remaining on the disc.

Table 2

| Example No. | Metal Carboxylate | Acid to metal ratio | Polishing rate | Comments |
|---|---|---|---|---|
| | None (first disc) | | 5.79 | 10% detached/tearing |
| 29 | Copper naphthenate | (64:1) | 3.55 | some cracking |
| 30 | Copper naphthenate | (32:1) | 2.47 | faint cracking |
| 31 | Copper naphthenate | (16:1) | 2.14 | very slight cracking |
| 32 | Copper naphthenate | (12:1) | 2.15 | crack-free |
| 33 | Zirconium dryer | (64:1) | 2.32 | some cracking |
| 34 | Zirconium dryer | (32:1) | 1.20 | very slight cracking |
| 35 | Zirconium dryer | (12:1) | 1.20 | very slight cracking |
| | None (second disc) | | - | detached |
| 36 | Ferrous octoate | (64:1) | 2.89 | some cracking |
| 37 | Ferrous octoate | (32:1) | 2.50 | some cracking |
| 38 | Ferrous octoate | (16:1) | 1.37 | rough |
| 39 | Ferrous octoate | (12:1) | 1.25 | slightly rough |
| 40 | Ferrous octoate | (8:1) | 1.02 | crack-free |
| 41 | Stannous octoate | (64:1) | (3.60) | 35 - 75% detached |
| 42 | Stannous octoate | (16:1) | 2.25 | crack-free |

**Examples 43 to 48**

Single-pack antifouling paints were prepared having the following formulation.

| | Parts by weight |
|---|---|
| Copolymer solution of Example 1 | 42.3 |
| Bentonite clay | 1.3 |
| Titanium dioxide | 7.1 |
| "Aerosil" colloidal silica | 7.1 |
| Ethyl vinyl ether polymer | 4.7 |
| Chlorinated paraffin | 3.1 |
| Cuprous thiocyanate | 23.0 |
| Xylene | 10.4 |
| Metal carboxylate | variable |

The amount of metal carboxylate used was sufficient to give a molar ratio of blocked acid groups in the copolymer to metal carboxylate as set out in Table 3 below. The various paints produced were tested on a

rotating disc as described above. The results are quoted in Table 3.

Table 3

| Example No. | Metal Carboxylate | Acid to metal ratio | polishing rate | Comments |
|---|---|---|---|---|
| | None | | - | Disappeared within 23 days |
| 43 | Copper naphthenate | 32:1 | - | Disappeared within 23 days |
| 44 | Copper naphthenate | 12:1 | 1.07 | Only one of the 2 stripes survived |
| 45 | Ferrous octoate | 32:1 | - | Disappeared within 23 days |
| 46 | Ferrous octoate | 16:1 | 1.06 | |
| 47 | Ferrous octoate | 12:1 | 0.82 | |
| 48 | Ferrous octoate | 8:1 | 1.19 | |

**Examples 49 to 54**

An acid-functional copolymer comprising units of methacrylic acid, ethyl methacrylate and methoxyethyl acrylate in molar ratio 24:56:20 was prepared as a 40% by weight solution in a 1:1 by volume mixture of xylene and butanol. Copper naphthenate (6 g Cu per 100 g) was added to the copolymer solution at various molar ratios of copper to carboxylic acid groups in the polymer, as shown in Table 4. The viscosity of the resulting composition was measured after 30 minutes and after 1, 6 and 21 days. The results are shown in Table 4.

As shown in Table 4, the compositions having a metal to acid molar ratio of 1:12 to 1:64 had a substantially stable viscosity on storage, indicating that they can be used as the binder of a single-pack or two-pack antifouling paint. The compositions having a metal to acid molar ratio of 1:4 to 1:8 were more viscous and increased in viscosity on storage over 21 days. They can be used as the binder of a 2-pack antifouling paint. The viscosity of the compositions, and of the initial acid-functional copolymer, can be decreased by increasing the proportion of polar solvent (butanol) in the polymer blend.

The compositions of Examples 48 to 54 were coated on steel panels and formed hard, adherent films. The composition of Example 49 having a metal to acid molar ratio of 1:4 was slightly brittle. When the coated panels were immersed in seawater the coatings of Examples 49 to 51 remained as smooth hard films, with no indication of skin formation. The coatings of Examples 52 to 54 showed some skin formation (similar to Examples 1, 5 and 6), with the skin being thinner and tighter with increasing amounts of copper naphthenate.

**Examples 55 to 59**

Zinc rosinate (rosin 50% neutralised by zinc oxide) was added to the acid-functional copolymer of Examples 49 to 54 at various molar ratios of zinc to carboxylic acid as shown in Table 4. The viscosity of the resulting composition was measured after 30 minutes and after 1, 6 and 21 days. The results are shown in Table 4.

As shown in Table 4, the results are similar to those obtained with copper naphthenate. In particular, the compositions having a zinc to acid molar ratio of 1:12 to 1:64 showed a substantially stable viscosity on storage. They can be used as the binder of a single-pack or 2-pack antifouling paint.

When coated on steel panels, the compositions of Examples 55 to 59 formed hard, adherent films. When the coated panels were immersed in seawater the coating of Example 55 showed substantially no skin formation. The coatings of Examples 56 to 59 showed some skin formation with the skin being thinner and tighter with increasing amounts of zinc rosinate.

Table 4

| Example No. | Metal carboxylate | Metal to acid ratio | viscosity in poise after | | | |
|---|---|---|---|---|---|---|
| | | | 30 mins | 1 day | 6 days | 21 days |
| 49 | copper naphthenate | 1:4 | 31 | 34 | 32 | over 40 |
| 50 | copper naphthenate | 1:8 | 20 | 18 | 30 | over 40 |
| 51 | copper naphthenate | 1:12 | 10.4 | 16 | 12.4 | 17 |
| 52 | copper naphthenate | 1:16 | 7.6 | 8.4 | 8.4 | 10 |
| 53 | copper naphthenate | 1:32 | 5.6 | 5.6 | 6 | 7.2 |
| 54 | copper naphthenate | 1:64 | 4.4 | 4.8 | 5.2 | 6.4 |
| 55 | zinc rosinate | 1:8 | 30 | 30 | 30 | 28 |
| 56 | zinc rosinate | 1:12 | 24 | 24 | 24 | 24 |
| 57 | zinc rosinate | 1:16 | 14 | 14 | 14 | 14 |
| 58 | zinc rosinate | 1:32 | 8 | 8 | 8 | 8.4 |
| 59 | zinc rosinate | 1:64 | 8 | 8 | 8 | 9.2 |

**Example 60**

Titanium acetylacetonate (sold under the trade name "Tilcom P12") was added to the acid-functional copolymer solution of Examples 49 to 54 at a titanium to acid molar ratio of 1:12. A stable homogeneous low viscosity solution was produced. When this coating composition was applied to a steel panel it formed a hard, smooth film. When the film was immersed in seawater, a skin was formed, although this was thinner and tighter than the skin formed in a coating of acid-functional polymer without any metal compound.

**Example 61**

Zirconium acetylacetonate in butanol solution was added to the acid-functional copolymer solution of Examples 49 to 54 at a zirconium to acid molar ratio of 1:12. A stable homogeneous solution was produced with no substantial increase in viscosity. When this coating composition was applied to a steel panel it formed a hard, smooth film. When the film was immersed in seawater it remained as a hard, smooth film with no skin formation.

**Example 62**

Ferrous rosinate (60% neutralised) was added to the acid-functional copolymer solution of Examples 49 to 54 at an iron to acid molar ratio of 1:12. The polymer solution increased in viscosity but did not gel and the resulting coating composition had a stable viscosity on storage. When the coating was applied to a steel panel it formed a hard, smooth film. When the film was immersed in seawater a skin was formed, although this was tighter and thinner than the skin formed on a coating of acid-functional

## Claims

1. An antifouling coating composition comprising a biocide for marine organisms and a solution or dispersion of a binder polymer (A) which is an acid-functional polymer or a polymer hydrolysable to an acid-functional polymer, characterised in that the composition contains a solution of a compound (B) of a polyvalent cation or of a precursor of such a compound at a molar ratio of polyvalent cations in the compound (B) to acid groups and/or groups hydrolysable to acid groups in the polymer (A) of 1:4 to 1:100, the polymer (A) and the compound (B) being at least partially reacted in a crosslinking reaction to form an

ungelled composition or being capable of undergoing a crosslinking reaction when the composition is coated on a surface, said crosslinking reaction being a reaction in which the polyvalent cation forms crosslinks between acid groups on different polymer molecules.

2. A coating composition according to claim 1, characterised in that the binder polymer (A) is a carboxylic-acid-functional polymer or a polymer hydrolysable to a carboxylic-acid-functional polymer.

3. A coating composition according to claim 2, characterised in that the binder polymer (A) is an addition polymer containing units of an olefinically unsaturated carboxylic acid or a hydrolysable derivative thereof.

4. A coating composition according to claim 2 or claim 3, characterised in that the binder polymer (A) contains free carboxylic acid groups.

5. A coating composition according to claim 2 or claim 3, characterised in that the binder polymer (A) contains carboxylic acid anhydride groups.

6. A coating composition according to claim 2 or claim 3, characterised in that the acid groups of the binder polymer (A) are bonded to a blocking group by a hydrolysable bond so that the polymer (A) is protected from substantial crosslinking by the polyvalent cation of compound (B) during storage of the coating composition.

7. A coating composition according to claim 6, characterised in that the binder polymer (A) contains hydrolysable triorganosilyl carboxylate ester groups.

8. A coating composition according to claim 6, characterised in that the binder polymer (A) contains amine carboxylate salt groups derived from a monoamine including at least one organic group containing at least 8 carbon atoms.

9. A coating composition according to any of claims 1 to 8, characterised in that the compound (B) is an organic-solvent-soluble salt of a polyvalent metal.

10. A coating composition according to claim 9, characterised in that the polyvalent metal salt is a salt of a monobasic carboxylic acid having 6 to 20 carbon atoms.

11. A coating composition according to claim 9 or claim 10, characterised in that the polyvalent metal salt is a cupric, ferrous, stannous, zinc, chromous or zirconyl salt.

12. A coating composition according to any of claims 9 to 11, characterised in that the cations of the polyvalent metal are complexed with a volatile ligand as complexing agent so that the polymer (A) is protected from substantial crosslinking by the polyvalent metal during storage of the coating composition.

13. A coating composition according to any of claims 1 to 8, characterised in that a precursor of a compound (B) is used which is a diamine.

14. A coating composition according to any of claims 1 to 13, characterised in that the molar ratio of the polyvalent cations in the compound (B) to acid groups and/or groups hydrolysable to acid groups in the polymer (A) is 1:8 to 1:32.

15. A coating composition according to any of claims 1 to 14, characterised in that the biocide for marine organisms is a metalliferous pigment which is sparingly soluble in seawater.

16. A coating composition according to claim 15, characterised in that the polymer (A) and the metalliferous pigment are packaged separately during storage of the coating composition.

17. A coating composition according to claim 16, characterised in that the compound (B) is packaged with the metalliferous pigment.

18. A coating composition according to claim 16, characterised in that one package of the coating composition contains a solution of the binder polymer (A) and the other package of the coating composition contains a solution of the compound (B) mixed with a biocide for marine organisms which is a sparingly seawater-soluble metalliferous pigment and a plasticiser or an auxiliary film-forming resin.

19. A coating composition according to claim 16, characterised in that the compound (B) is packaged with the polymer (A).

20. A coating composition according to claim 15, characterised in that the metalliferous pigment is cuprous thiocyanate and the coating composition is stored as a single package.

21. A coating composition according claim 15, characterised in that the acid groups of the polymer (A) are bonded to a blocking group by a hydrolysable bond so that the polymer (A) is protected from substantial crosslinking by the metalliferous pigment during storage of the coating composition, and the composition is stored as a single package.

22. A coating composition according to claim 21, characterised in that the acid groups of the polymer (A) are in the form of amine carboxylate salt groups derived from a monoamine including an organic group containing at least 8 carbon atoms